# EUROPEAN PATENT APPLICATION

(11) **EP 3 588 843 A1**
(43) Date of publication of application: **01.01.2020**
(21) Application number: 18179361.3
(22) Date of filing: 22.06.2018
(51) Int. Cl.: H04L 9/32

(54) **METHOD AND SYSTEM FOR EXECUTING AN INFORMATION-THEORETICALLY SECURE AUTHENTICATION SCHEME**

(71) Applicant: QuBalt GmbH, 24534 Neumünster (DE)
(72) Inventor: HARDER, Wulf, 24534 Neumünster (DE)
(74) Representative: Horn Kleimann Waitzhofer Patentanwälte PartG mbB

(57) **Abstract**

A method for executing an information-theoretically secure authentication scheme with a sender entity (S) and a plurality N of receiver entities (R₁-R₃) is proposed, the method comprising:
at the sender entity (S), for each certain receiver entity of the N receiver entities (R₁-R₃), inputting (101) the message (M) into a hash function (f₁-f₃) being receiver-specific to said certain receiver entity (R₁-R₃) and being secret between the certain receiver entity (R₁-R₃) and the sender entity (S) for calculating a receiver-specific first hash value (h₁₁-h₁₃) allocated to the certain receiver entity (R₁-R₃),
generating a table (T) containing the N calculated receiver-specific first hash values (h₁₁-h₁₃),
transferring (102) the message (M) and the table (T) or a part of the table (T)to a particular receiver entity of the N receiver entities (R₁-R₃), and
at the particular receiver entity (R₁-R₃), inputting (103) the transferred message (M) to the receiver-specific and secret hash function (f₁-f₃) for calculating a second hash value (h₂₁-h₂₃) and comparing the calculated second hash value (h₂₁-h₂₃) with the transferred receiver-specific first hash value (h₁₁-h₁₃) allocated to the particular receiver entity (R₁-R₃) for providing an authentication result.

## Description

### FIELD OF THE INVENTION

The present invention relates to a method, to a computer program and to a system for executing an information-theoretically secure authentication scheme with a sender entity and a plurality of receiver entities.

### BACKGROUND

When a message is sent from a sender entity to a receiver entity, an adversary may intercept the message and falsify it or corrupt it. In order to detect such a corruption, the sender entity may also send a digital signature for authentication to the receiver entity. Such methods for authentication are described in public cryptography standards. The receiver entity may then verify that the digital signature belongs to the message. If this is not the case, the receiver entity notes that the received message has been corrupted. It is believed that the cryptographic algorithms used to calculate the digital signature are based on hard mathematical problems and an adversary cannot generate the valid digital signature to a certain message without having the key.

However, there is no evidence for the security of such public cryptographic standards. In particular for safety-critical systems, their use may include great risks. An adversary may possibly use cryptanalysis or quantum computers to break such public cryptographic standards without becoming public knowledge.

These risks may be avoided by using an information-theoretically secure authentication procedure. There is an information-theoretically secure procedure by Carter and Wegman from 1981 (see reference [1]). It is mathematically proven secure against any type of attacks, including attacks based on cryptanalysis and quantum computers. Therefore, the authentication procedure is also used for data being transmitted via quantum communication channels, which provide a perfect secrecy for the data.

In this procedure by Carter and Wegman, trees of smaller hash functions are used, wherein the outputs of said smaller hash functions are used as inputs for one of the further smaller hash functions. Parts or message parts of the message to be authenticated are input in pairs into said smaller hash functions. The hash values are then processed in pairs in an analogue manner, by further smaller hash functions of said tree, until only one hash value remains at the end of processing said tree.

In this method, a secret or a key that is owned by both, the sender entity and the receiver entity of the message, is also used as input into the tree of smaller hash functions.

A disadvantage of this method is that the authenticity of a message can only be checked by a receiver entity, if the receiver entity and the sender entity share a common secret. This problem does not exist when using a public-key method, because every receiver entity can check the authenticity by using the public key of the sender entity. But if, when using the procedure by Carter and Wegman, the same secret is given to multiple receiver entities, the correctness of the authenticity check of each of the receiver entities would depend on the behaviour and discretion of the other receiver entities. If one receiver entity lets the secret leak, then all the other receiver entities can no longer be sure that a received message originates from the expected sender entity. Moreover, a receiver entity may pretend that a message came from the expected sender entity.

Accordingly, it is an aspect of the present invention to improve the execution of an authentication scheme with a sender entity and a receiver entity.

### BRIEF SUMMARY OF THE INVENTION

According to a first aspect, a method for executing an information-theoretically secure authentication scheme with a sender entity and a plurality N of receiver entities is proposed. The method comprises the following steps:
at the sender entity, for each certain receiver entity of the N receiver entities, inputting the message into a hash function being receiver-specific to said certain receiver entity and being secret between the certain receiver entity and the sender entity for calculating a receiver-specific first hash value allocated to the certain receiver entity,
generating a table containing the N calculated receiver-specific first hash values,
transferring the message and the table or a part of the table to a particular receiver entity of the N receiver entities, and
at the particular receiver entity, inputting the transferred message to the receiver-specific and secret hash function for calculating a second hash value and comparing the calculated second hash value with the transferred receiver-specific first hash value allocated to the particular receiver entity for providing an authentication result.

By using the present method, information-theoretical security is obtained in authenticating a message sent to multiple receiver entities without depending on the behaviour and discretion of other receiver entities of the message.

A sender entity, as used therein, may also refer to a transmitter or transmitter device. A receiver entity, as used therein, may also refer to a recipient or recipient device.

According to the present method, the sender entity calculates a plurality of hash values, the first hash values, for a plurality of recipients, which were formed from the message with different hash functions or with secret keys also entered into the hash function. These calculated hash values are transmitted to the receiver entities. The respective receiver entity checks the authenticity of the message by comparing the hash value determined from the plurality of hash values with the hash value calculated by the receiver entity itself.

For example, the message may include software, like a software package or a software update. For example, software updates may be available to different recipients on a server of the sender entity. Then, the software may be stored on the server together with hash values stored in a table for all the receiver entities. For example, if a software update of 1 GB software is to be made available to 1 million receiver entities, and a corresponding hash value is 16 bytes long, then the authentication part requires approximately 1.5% of the size of the software update. In contrast to conventional methods, however, one obtains information-theoretical security in the transfer of the software and is, therefore, secure against attacks with the help of cryptanalysis or quantum computers advantageously.

In particular, the authentication scheme is information-theoretically secure if its security derives only from information theory. It cannot be broken even when an adversary has unlimited computing power, because the adversary does not have enough information to break the secure authentication scheme. Thus, the authentication scheme is also secure against attacks with cryptanalysis and quantum computers.

In an embodiment, for calculating the N receiver-specific first hash values at the sender entity, the message is input into N different hash functions, wherein each of the N different hash functions is allocated to a certain one of the receiver entities.

In a further embodiment, for calculating the N receiver-specific first hash values at the sender entity, the message is input into one hash function N times, wherein each time of said N times one of the receiver-specific first hash values for the respective certain receiver entity is calculated by the hash function using a receiver-specific secret being shared between the sender entity and the certain receiver entity.

In a further embodiment, the message has a plurality of message parts, wherein the messages parts are input into a tree of first hash functions representing a hash function family of second hash functions, wherein the first hash functions use a further secret for forming a certain one of the second hash functions of the hash function family, wherein the certain second hash function corresponds to the receiver-specific hash function being receiver-specific to said certain receiver entity.

Embodiments for said tree are described in the EP applications EP18179235.9 and EP18179255.7. The contents of said EP applications EP18179235.9 and EP18179255.7 are incorporated by reference to the present patent application.

In particular, the tree may have at least one first hash function that receives as inputs one of the message parts and an output of one of the other first hash functions of the tree.

Because, in at least one of the first hash functions, one of the message parts and one output of one of the other first hash functions are input, it is possible that no zeros and no blanks have to be introduced as inputs.

The percentual gain in computing time is particularly high for short messages which may be used for controlling safety-critical systems. In other words, the technical effect here is an increase in processing speed when executing the authentication scheme.

The tree may comprise N first hash functions and M levels, wherein the lowest of said M levels corresponds to a root of the tree. One of the N first hash functions is allocated to said root, and the other N-1 first hash functions are allocated to the other M-1 higher levels of the tree.

The provided hash value may be part of authentication data for authenticating the sender entity's message to the receiver entity.

In particular, the output of the very last first hash function in the tree corresponds to the output of the tree. Therefore, this output of the very last first hash function represents the hash value which may be part of said authentication data.

In a further embodiment, a tree part including at least two first hash functions of the tree is completely calculated before other tree parts of the tree are calculated.

If a first tree part is completely calculated before calculating other parallel tree parts, the entries in the first tree part are no longer needed. They no longer have to be loaded or saved or stored in memory. Instead, only the result of the first tree part needs to be saved, resulting in less memory consumption. A tree part may also be referenced to as subtree.

In a further embodiment, the first hash functions of the tree are calculated in a certain order, said certain order being defined by a recursive algorithm beginning at the root of the tree.

In particular, the authentication scheme is information-theoretically secure if its security derives only from information theory. It cannot be broken even when an adversary has unlimited computing power, because the adversary does not have enough information to break the secure authentication scheme. Thus, the authentication scheme is also secure against attacks with quantum adversaries. In a further embodiment, the authentication scheme is the authentication scheme of Carter and Wegman (see references [1] and [2]). The authentication scheme of Carter and Wegman is advantageously information-theoretically secure. The security of the authentication scheme of Carter and Wegman for settings in which the authentication key is partially known by the adversary is studied in reference [3].

In a further embodiment, the provided hash value may be encrypted by one-time pad, wherein the encrypted hash value is transferred from the sender entity to the receiver entity.

In a further embodiment, the second hash functions of the hash function family are universal hash functions.

In a further embodiment, the first hash functions use a secret for forming a certain one of the second hash functions of the hash function family. The secret may be embodied by a key.

Thus, a particular one of the second hash functions may be selected by said certain secret. In dependence on said certain secret, the first hash functions of the tree constitute said certain one of the second hash functions of the hash function family.

In a further embodiment, the secret is provided to the sender entity and the receiver entity in advance. In particular, the term "in advance" means a time before the execution of the authentication scheme begins.

Moreover, information for forming the tree may be provided to the sender entity and the receiver entity.

In a further embodiment, the message includes a software, in particular transmitted or to be transmitted from the sender entity to the receiver entity. The software transmitted from the sender entity to the receiver entity may be encrypted or may be unencrypted. Alternatively or additionally, said software may be transformed with white-box cryptography methods.

In a further embodiment, the receiver entity is a tamper resistant hardware. The tamper resistant hardware may be a hardware security module or a smartcard or a secured area in a processor. In particular, the secure hardware is a tamper-resistant storage device which is configured to protect against manipulation and stealing of the authentication key. Protection against manipulation prevents adversaries from manipulating an authentication key and subsequent transferring a malicious message, like for instance a malicious software. Furthermore, the authentication keys are kept secret. Alternatively, or additionally, the authentication keys may be distributed in a secure way. For example, the authentication keys may be stored in a secure, tamper-resistant chip, in a smart-card, in a tamper-resistant SIM card, or in a hardware security module. In particular, SIM cards and SIM card readers may be used to install secrets or authentication keys in the receiver entity in a secure way anytime.

In a further embodiment, the sender entity is a tamper resistant hardware. In particular, the authentication key is stored in tamper-resistant storage which is configured to protect against manipulation and stealing of the authentication key. Furthermore, the authentication keys are kept secret.

In a further embodiment, the secret and/or the further secret is protected using white-box cryptography. White-box cryptography is an approach to designing and implementing cryptographic algorithms in such a way that their program code, internal data, and keys are protected against attacks like debugging, reverse-engineering and key retrieval (see reference [4]).

In a further embodiment, the secret and/or the further secret is protected using fully homomorphic encryption.

In a further embodiment, the particular receiver entity includes a plurality of receiver units, wherein all the receiver units share the same receiver-specific and secret hash function being secret between the particular receiver entity and the sender entity.

In a further embodiment, the sender entity includes a plurality of sender units, wherein each of the sender units, for sending a message to a certain receiver entity of the N receiver entities, inputs the message into the same hash function being receiver-specific to said certain receiver entity and being secret between the certain receiver entity and the sender entity.

Any embodiment of the first aspect may be combined with any embodiment of the first aspect to obtain another embodiment of the first aspect.

According to a second aspect, the invention relates to a computer program comprising a program code for executing the method of the first aspect or of an embodiment of the first aspect for executing an authentication scheme with a sender entity and a plurality N of receiver entities when run on at least one computer.

According to a third aspect, a system having a sender entity and a plurality N of receiver entities for executing an information-theoretically secure authentication scheme with the sender entity and the plurality N of receiver entities is proposed. The sender entity includes an input unit for inputting the message, for each certain receiver entity of the N receiver entities, into a hash function being receiver-specific to said certain receiver entity and being secret between the certain receiver entity and the sender entity for calculating a receiver-specific first hash value allocated to the certain receiver entity, a generator unit for generating a table containing the N calculated receiver-specific first hash values and a transfer unit for transferring the message and the table or a part of the table to a particular receiver entity of the N receiver entities. The particular receiver entity is configured to input the transferred message to the receiver-specific and secret hash function for calculating a second hash value and to compare the calculated second hash value with the transferred receiver-specific first hash value allocated to the particular receiver entity for providing an authentication result.

Any embodiment of the first aspect may be combined with the above third aspect to obtain a further embodiment of the third aspect.

According to a fourth aspect, a method for executing an information-theoretically secure authentication scheme with a sender entity and a plurality N of receiver entities is proposed. The method comprises the following steps:
at the sender entity, for each certain receiver entity of the N receiver entities, inputting the message into a hash function being receiver-specific to said certain receiver entity and being secret between the certain receiver entity and the sender entity for calculating a receiver-specific first hash value allocated to the certain receiver entity,
transferring the message and a table including the N calculated receiver-specific first hash values to a particular receiver entity of the N receiver entities, and
at the particular receiver entity, inputting the transferred message to the receiver-specific and secret hash function for calculating a second hash value and comparing the calculated second hash value with the transferred receiver-specific first hash value allocated to the particular receiver entity for providing an authentication result.

In the following, exemplary embodiments of the present invention are described with reference to the enclosed figures.

### BRIEF DESCRIPTION OF THE DRAWINGS

Fig. 1 shows an embodiment of a sequence of method steps for executing an information-theoretically secure authentication scheme with a sender entity and a plurality N of receiver entities;
Fig. 2 shows a first embodiment of a system for executing an information-theoretically secure authentication scheme with a sender entity and a plurality N of receiver entities;
Fig. 3 shows a second embodiment of a system for executing an information-theoretically secure authentication scheme with a sender entity and a plurality N of receiver entities; and
Fig. 4 shows a third embodiment of a system for executing an information-theoretically secure authentication scheme with a sender entity and a plurality N of receiver entities.

Similar or functionally similar elements in the figures have been allocated the same reference signs if not otherwise indicated.

### DETAILED DESCRIPTION OF THE EMBODIMENTS

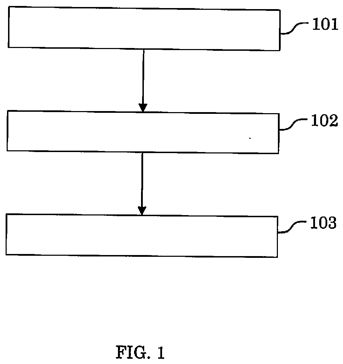

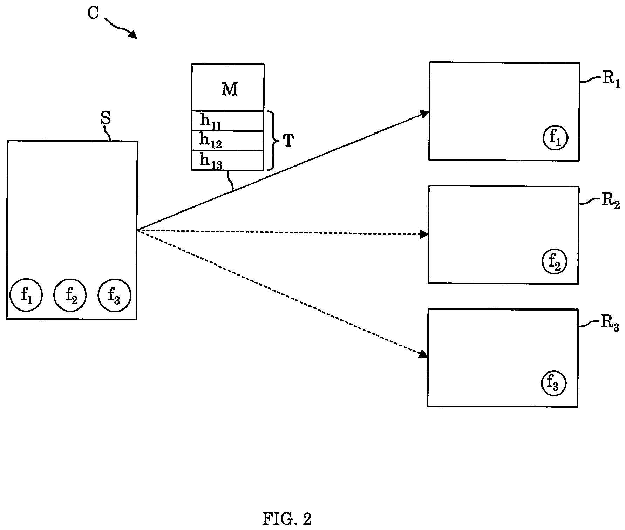

In Fig. 1, an embodiment of a sequence of method steps for executing an information-theoretically secure authentication scheme with a sender entity S and a plurality N of receiver entities R₁, R₂, R₃ (see Fig. 2) is depicted. The method of Fig. 1 is described in the following with reference to Fig. 2 illustrating a first embodiment of a system C for executing an information-theoretically secure authentication scheme with a sender entity S and a plurality N of receiver entities R₁, R₂, R₃. The system C may also be referenced as communication system C. Without loss of generality, N is 3 in the example of Fig. 2.

In particular, the part of the authentication scheme executed by the method of Fig. 1 is the authentication scheme of Carter and Wegman.

The method of Fig. 1 has the following method steps 101 - 103:
In step 101, at the sender entity S, for each certain receiver entity of the N receiver entities R₁ - R₃ (N=3), the message M is input into a hash function f₁ - f₃ being receiver-specific to said certain receiver entity R₁ - R₃ and being secret between the certain receiver, here one of the receiver entities R₁ - R₃, and the sender entity S for calculating a receiver-specific first hash value h₁₁ - h₁₃ allocated to the certain receiver entity R₁ - R₃. Without loss of generality, Fig. 2 shows a system C including one sender entity S and three different receiver entities R₁, R₂, R₃. The hash function f₁ shown in Fig. 2 is receiver-specific to the first receiver entity R₁ and secret between the first receiver entity R₁ and the sender entity S. In this regard, the hash function f₁ may be only stored in the sender entity S and in the receiver entity R₁. In an analogous way, the hash function f₂ is receiver-specific to the second receiver entity R₂ and secret between said second receiver entity R₂ and the sender entity S. Therefore, said hash function f₂ may be only stored in the sender entity S and the second receiver entity R₂. In an analogous way, hash function f₃ being receiver-specific to the third receiver entity R₃ may be only stored in the sender entity S and said third receiver entity R₃.

In the example of Fig. 2, the sender entity S calculates three different first hash values h₁₁, h₁₂ and h₁₃. For calculating the first hash value h₁₁ being receiver-specific to the first receiver entity R₁, the sender entity S inputs the message M into the hash function f₁ being receiver-specific to said first receiver entity R₁. In an analogous way, for calculating the first hash value h₁₂ being receiver-specific to the second receiver entity R₁, the sender entity S inputs the message M into the hash function f₂ being receiver-specific to the second receiver entity R₂. Further, for calculating the first hash value h₁₃ being receiver-specific to said third receiver entity R₃, the sender entity S inputs the message M into the hash function f₃ being receiver-specific to the third receiver entity R₃.

As a result, the sender entity S calculates said three first hash values h₁₁, h₁₂, h₁₃ and may arrange them within a table T.

For calculating the three receiver-specific first hash values h₁₁ - h₁₃ at the sender entity S, the message M may be input into three different hash functions f₁-f₃. In other words, the hash functions f₁ - f₃ may be different to each other. In such a case, each of the three hash functions f₁-f₃ is allocated to a certain one of the receiver entities R₁ - R₃. In the example of Fig. 2, the hash function f₁ is allocated to the first receiver entity R₁, the hash function f₂ is located to the second receiver entity R₂, and the hash function f₃ is allocated to the third receiver entity R₃.

As an alternative, not shown in the example of Fig. 2, a message M may be input into one hash function N times, wherein each time of the N times one of the receiver-specific first hash values h₁₁-h₁₃ for the respective certain receiver entity R₁ - R₃ may be calculated by the hash function using a receiver-specific secret being secret between the sender entity S and the certain receiver entity R₁- R₃.

In step 102, the message M and the table T including the three calculated receiver-specific first hash values h₁₁ - h₁₃ are transferred, for example over a network (not shown), to a particular receiver entity of the N receiver entities R₁ - R₃.

In the example of Fig. 2, the message M and the table T are transferred from the sender entity S to the first receiver entity R₁. The dashed arrows in Fig. 2 illustrate that the message M and the table T may also be transferred to the second receiver entity R₂ and the third receiver entity R₃.

In step 103, at the first receiver entity R₁, the transferred message M is input to the receiver-specific and secret hash function f₁ (for said first receiver entity R₁) for calculating a second hash value h₂₁. Furthermore, the calculated second hash value h₂₁ is compared with the transferred receiver-specific first hash value h₁₁ allocated to said first receiver entity R₁ for providing an authentication result. If h₁₁ and h₂₁ correspond to each other, the authentication result is positive.

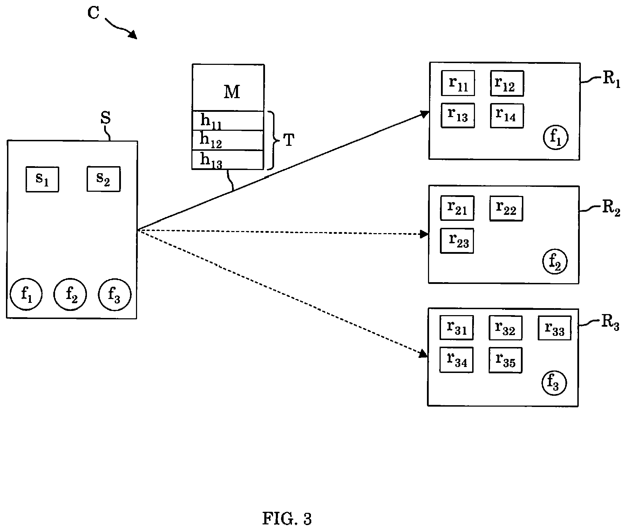

Fig. 3 shows a second embodiment of a system C for executing an information-theoretically secure authentication scheme with a sender entity S and a plurality N of receiver entities R₁ - R₃. The second embodiment of Fig. 3 includes all the features of the first embodiment of Fig. 2.

Moreover, in the embodiment of Fig. 3, each receiver entity R₁ - R₃ includes a plurality of receiver units r₁₁ - r₁₄; r₂₁ - r₂₃; r₃₁ - r₃₅. In the example of Fig. 3, the first receiver entity R₁ comprises the receiver units r₁₁ - r₁₄. The second receiver entity R₂ includes the receiver units r₂₁ - r₂₃, and the third receiver entity R₃ includes the receiver units r₃₁ - r₃₅.

All the receiver units of a certain one of the receiver entities share the same receiver-specific and secret hash function f₁ - f₃ being secret between the particular receiver entity R₁ - R₂ and the sender entity S. In detail, the receiver units r₁₁ - r₁₃ of the first receiver entity R₁ share the hash function f₁ being secret between the first receiver entity R₁ and the sender entity S. Furthermore, the receiver units r₂₁ - r₂₃ of the second receiver entity R₂ share the hash function f₂ being secret between the second receiver entity R₂ and the sender entity S. Moreover, the receiver units r₃₁ - r₃₅ of the third receiver entity R₃ share the hash function f₃ being secret between the third receiver entity R₃ and the sender entity S. Furthermore, as shown in the embodiment of Fig. 3, the sender entity S may include a plurality of sender units s₁, s₂. Without loss of generality, the sender entity S includes two sender units S₁, S₂. Each of the sender units s₁, s₂ may input, for sending a message M to a certain receiver entity of the N receiver entities R₁ - R₃, the message M into the same hash function f₁ - f₃ being receiver-specific to said certain receiver entity R₁ - R₃ and being secret between the certain receiver entity R₁ - R₃ and the sender entity S.

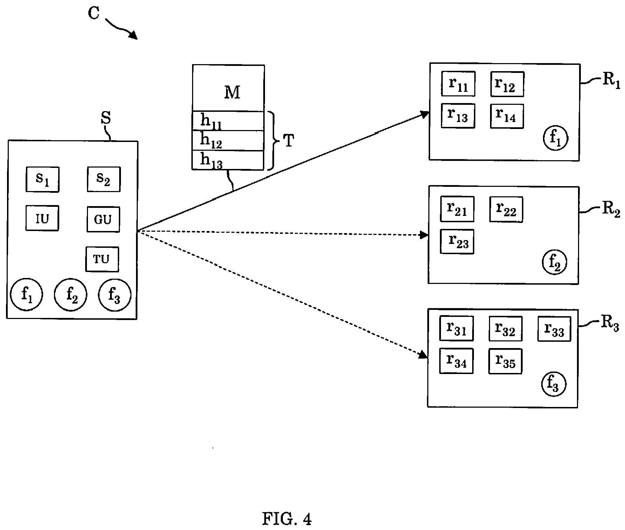

In Fig. 4, a third embodiment of a system C for executing an information-theoretically secure authentication scheme with a sender entity S and a plurality N of receiver entities R₁ - R₃ is shown. The third embodiment of Fig. 4 includes all the features of the second embodiment of Fig. 3.

Moreover, Fig. 4 shows that the sender entity S may include an input unit IU, a generator unit GU and a transfer unit TU. The input unit IU may be configured to input the message M, for each certain receiver entity of the N receiver entities R₁ - R₃, into a hash function f₁ - f₃ being receiver-specific to said certain receiver entity R₁ - R₃ and being secret between the certain receiver entity R₁ - R₃ and the sender entity S for calculating a receiver-specific first hash value h₁₁ - h₁₃ allocated to the certain receiver entity R₁ - R₃.

The generator unit GU is configured to generate a table T including the N calculated receiver-specific first hash values h₁₁-h₁₃.

The transfer unit TU may be configured to transfer the message M and the table T or a part of the table T to a particular receiver entity of the N receiver entities R₁ - R₃.

As already described with reference to the first and second embodiments of the system C (Fig. 2 and Fig. 3), the particular receiver entity R₁ - R₃ is configured to input the transferred message M to the receiver-specific and secret hash function f₁ - f₃ for calculating a second hash value h₂₁ - h₂₃ and to compare the calculated second hash value h₂₁ - h₂₃ with the transferred receiver-specific first hash value h₁₁ - h₁₃ allocated to the particular receiver entity R₁ - R₃ for providing an authentication result.

While the present invention has been described with reference to certain embodiments, it will be understood by those skilled in the art that various changes may be made and equivalents may be substituted without departing from the scope of the present invention. In addition, many modifications may be made to adapt a particular situation to the teachings of the present invention without departing from its scope. Therefore, it is intended that the present invention is not limited to the particular embodiments disclosed, but that the present invention will include all embodiments falling within the scope of the appended claims.

### REFERENCE NUMERALS

- C: system
- IU: input unit

- f₁: hash function being receiver-specific to first receiver entity R₁
- f₂: hash function being receiver-specific to second receiver entity R₂
- f₃: hash function being receiver-specific to third receiver entity R₃

- GU: generator unit

- h₁₁: first hash value being receiver-specific to first receiver entity R₁
- h₁₂: first hash value being receiver-specific to second receiver entity R₂
- h₁₃: first hash value being receiver-specific to third receiver entity R₃

- h₂₁: second hash value being receiver-specific to first receiver entity R₁
- h₂₂: second hash value being receiver-specific to second receiver entity R₂
- h₂₃: second hash value being receiver-specific to third receiver entity R₃

- M: message

- R₁: first receiver entity
- R₂: second receiver entity
- R₃: third receiver entity

- r₁₁: first receiver unit of first receiver entity
- r₁₂: second receiver unit of first receiver entity
- r₁₃: third receiver unit of first receiver entity
- r₁₄: fourth receiver unit of first receiver entity
- r₂₁: first receiver unit of second receiver entity
- r₂₂: second receiver unit of second receiver entity
- r₂₃: third receiver unit of second receiver entity

- r₃₁: first receiver unit of third receiver entity
- r₃₂: second receiver unit of third receiver entity
- r₃₃: third receiver unit of third receiver entity
- r₃₄: fourth receiver unit of third receiver entity
- r₃₅: fifth receiver unit of third receiver entity

- S: sender entity
- T: table
- TU: transfer unit

- 101 - 103: method steps

### REFERENCES

[1] J. Lawrence Carter and Mark N. Wegman, Universal Classes of Hash Functions, Journal of Computer and System Sciences 18, Nr. 2, p. 143-154, April 1979
[2] Mark N. Wegman and J. Lawrence Carter, New Hash Functions and Their Use in Authentication and Set Equality, Journal of Computer and System Sciences 22, p. 265-279, 1981
[3] Aysajan Abidin and Jan-Åke Larsson, Direct Proof of Security of Wegman-Carter Authentication with Partially Known Key, Quantum Information Processing 13, p. 2155-2170, 2013
[4] Brecht Wyseur, White-Box Cryptography, PhD Thesis, Katholieke Universiteit Leuven, March 2009

## Claims

1. A method for executing an information-theoretically secure authentication scheme with a sender entity (S) and a plurality N of receiver entities (R₁-R₃), the method comprising:
at the sender entity (S), for each certain receiver entity of the N receiver entities (R₁-R₃), inputting (101) the message (M) into a hash function (f₁-f₃) being receiver-specific to said certain receiver entity (R₁-R₃) and being secret between the certain receiver entity (R₁-R₃) and the sender entity (S) for calculating a receiver-specific first hash value (h₁₁-h₁₃) allocated to the certain receiver entity (R₁-R₃),
generating a table (T) containing the N calculated receiver-specific first hash values (h₁₁-h₁₃)
transferring (102) the message (M) and the table (T) or a part of the table (T) to a particular receiver entity of the N receiver entities (R₁-R₃), and
at the particular receiver entity (R₁-R₃), inputting (103) the transferred message (M) to the receiver-specific and secret hash function (f₁-f₃) for calculating a second hash value (h₂₁-h₂₃) and comparing the calculated second hash value (h₂₁-h₂₃) with the transferred receiver-specific first hash value (h₁₁-h₁₃) allocated to the particular receiver entity (R₁-R₃) for providing an authentication result.

2. The method of claim 1,
wherein, for calculating the N receiver-specific first hash values (h₁₁-h₁₃) at the sender entity (S), the message (M) is input into N different hash functions, wherein each of the N different hash functions is allocated to a certain one of the receiver entities (R₁-R₃).

3. The method of claim 1,
wherein, for calculating the N receiver-specific first hash values (h₁₁-h₁₃) at the sender entity (S), the message (M) is input into one hash function N times, wherein each time of said N times one of the receiver-specific first hash values (h₁₁-h₁₃) for the respective certain receiver entity (R₁-R₃) is calculated by the hash function using a receiver-specific secret being secret between the sender entity (S) and the certain receiver entity (R₁-R₃).

4. The method of claim 1,
where the message (M) has a plurality of message parts, wherein the messages parts are input into a tree of first hash functions representing a hash function family of second hash functions, wherein the first hash functions use a further secret for forming a certain one of the second hash functions of the hash function family, wherein the certain second hash function corresponds to the receiver-specific hash function (f₁-f₃) being receiver-specific to said certain receiver entity (R₁-R₃).

5. The method of claim 4,
wherein a tree part including at least two first hash functions of the tree is completely calculated before other tree parts of the tree are calculated.

6. The method of claim 5,
wherein the first hash functions of the tree are calculated in a certain order, said certain order being defined by a recursive algorithm beginning at the root of the tree.

7. The method of one of claims 1 to 6,
wherein, in at least one of the first hash functions, one of the message parts and an output of one of the other first hash functions are input.

8. The method of one of claims 1 to 7,
wherein the authentication scheme is the authentication scheme of Carter and Wegman.

9. The method of one of claims 1 to 8,
wherein the second hash functions of the hash function family are universal hash functions.

10. The method of one of claims 1 to 9,
wherein the sender entity (S) and/or the receiver entity (R₁-R₃) is a tamper resistant hardware, in particular a hardware security module or a smartcard or a secured area in a processor.

11. The method of one of claims 1 to 10,
wherein the secret and/or the further secret is protected using white-box cryptography or using fully homomorphic encryption.

12. The method of one of claims 1 to 11,
wherein the particular receiver entity (R₁-R₃) includes a plurality of receiver units (r₁₁-r₁₄: r₂₁-r₂₃; r₃₁-r₃₅), wherein all the receiver units (r₁₁-r₁₄: r₂₁-r₂₃; r₃₁-r₃₅) share the same receiver-specific and secret hash function (f₁-f₃) being secret between the particular receiver entity (R₁-R₃) and the sender entity (S).

13. The method of claim 12,
wherein the sender entity (S) includes a plurality of sender units (s₁, s₂), wherein each of the sender units (s₁, s₂), for sending a message (M) to a certain receiver unit (r₁₁-r₁₄; r₂₁-r₂₃; r₃₁-r₃₅) of the N receiver entities (R₁-R₃), inputs the message (M) into the same hash function (f₁-f₃) being receiver-specific to said certain receiver entity (R₁-R₃) and being secret between the certain receiver entity (R₁-R₃) and the sender entity (S).

14. A computer program comprising a program code for executing the method of one of claims 1 to 13 for executing an authentication scheme with a sender entity (S) and a plurality N of receiver entities (R₁-R₃) when run on at least one computer.

15. A system (C) having a sender entity (S) and a plurality N of receiver entities (R₁-R₃) for executing an information-theoretically secure authentication scheme with the sender entity (S) and the plurality N of receiver entities (R₁-R₃), wherein:
the sender entity (S) includes an input unit (IU) for inputting the message (M), for each certain receiver entity of the N receiver entities (R₁-R₃), into a hash function (f₁-f₃) being receiver-specific to said certain receiver entity (R₁-R₃) and being secret between the certain receiver entity (R₁-R₃) and the sender entity (S) for calculating a receiver-specific first hash value (h₁₁-h₁₃) allocated to the certain receiver entity (R₁-R₃), a generator unit (GU) for generating a table (T) containing the N calculated receiver-specific first hash values (h₁₁-h₁₃) and a transfer unit (TU) for transferring the message (M) and the table (T) or a part of the table (T) to a particular receiver entity of the N receiver entities (R₁-R₃),
wherein the particular receiver entity (R₁-R₃) is configured to input the transferred message (M) to the receiver-specific and secret hash function (f₁-f₃) for calculating a second hash value (h₂₁-h₂₃) and to compare the calculated second hash value (h₂₁-h₂₃) with the transferred receiver-specific first hash value (h₁₁-h₁₃) allocated to the particular receiver entity (R₁-R₃) for providing an authentication result.
